# EUROPEAN PATENT APPLICATION

(11) **EP 1 056 221 A2**
(43) Date of publication of application: **29.11.2000**
(21) Application number: 00110899.2
(22) Date of filing: 23.05.2000
(51) Int. Cl.: H04B 7/08, H01Q 21/30

(54) **Integrated receiving system for receiving a plurality of media signals and corresponding signal reception processing method**

(30) Priority: 25.05.1999 JP 14560599
(71) Applicant: TOYOTA JIDOSHA KABUSHIKI KAISHA, Aichi-ken 471-8571 (JP)
(72) Inventor: Morita, Makoto, Toyota-shi, Aichi-ken 471-8571 (JP)
(74) Representative: Leson, Thomas Johannes Alois, Dipl.-Ing.

(57) **Abstract**

Antenna units 100A and 100B receive signals of two different media. The antenna units 100A and 100B are connected to an integrated receiver through a common coaxial cable 10. The two media signals are frequency divided through frequency conversion by use of local oscillators LOA1 and LOB1 and travel over the common coaxial cable 10. Configuration is simplified because only a single cable provided for a plurality of antennas. In another aspect, the antenna side is provided with a changeover switch for allowing the two media signals to alternately travel over the common coaxial cable. In a further aspect, frequency conversion processing is effected on the antenna side such that one media signal at a time is converted into a signal having a specific frequency capable of being processed by the receiver side.

## Description

### BACKGROUND OF THE INVENTION

### 1. Field of the Invention

The present invention relates to a media integrated receiving system capable of receiving a plurality of different media signals and to a media signal reception processing method for receiving and processing a plurality of different media signals.

### 2. Description of Related Art

It is now common for a variety of media information to be provided to vehicles by radio. Examples of such media information include GPS and VICS information in which GPS information is received in the form of position detecting signals transmitted from GPS (Global Positioning System) satellites and VICS information is traffic-related information presented by road administrators through, e.g., roadside beacons. Digital television broadcasting and data broadcasting are also scheduled to start in the near future.

Individual receiving systems have hitherto separately been provided for respective media. More specifically, an antenna is located at a position, such as on top of the vehicle roof, which facilitates receipt of electromagnetic signals, a radio receiver is placed within the body interior, and the antenna and radio receiver are connected via a coaxial cable. Such a configuration is provided on a media-to-media basis.

With an increase in number of media, there has been proposed an integrated receiving system in which a single radio receiver can handle a plurality of media. However, even with such an integrated receiver, an antenna must be provided for each media, and thus a plurality of antennas must separately be coupled to the receiver. For example, the integrated receiver is coupled via a coaxial cable to a GPS antenna, via another coaxial cable to a VICS antenna, and via yet another coaxial cable to a TV antenna. Such a configuration is complicated due to the number of coaxial cables and is disadvantageous in terms of vehicle mounting properties as well as cost.

### SUMMARY OF THE INVENTION

The present invention was conceived in view of the above problems. It is therefore one object of the present invention to provide an integrated receiving system having a simple configuration and suited to vehicle mounting, and capable of reducing cost.

According to a first aspect of the present invention, there is provided a media integrated receiving system which receives a plurality of media signals by use of a plurality of antennas, the system comprising a signal processing unit capable of processing the plurality of media signals; a multiplexing/transmission unit for multiplexing and transmitting the plurality of media signals received by use of the plurality of antennas; and a signal selection/separation unit for selecting and separating media signals to be signal processed by the signal processing unit, from the multiplexed and transmitted signals.

In the above media integrated receiving system of the present invention, the multiplexing/transmission unit multiplexes and transmits the plurality of media signals received by use of the plurality of antennas, and the signal selection/separation unit selects and separates media signals to be signal processed by the signal processing unit, from the multiplexed and transmitted signals. As a result, the media integrated receiving system of the present invention enables the transmission of the multiplexed signals through a single transmission cable, eliminating the need to provide separate transmission cable for each antenna.

In a media integrated receiving system of the present invention, the signal selection/separation unit may select and separate the plurality of media signals in a sequential manner.

In a media integrated receiving system of the present invention, the multiplexing/transmission unit may include a plurality of local oscillators having different oscillation frequencies so that the plurality of media signals are multiplexed through frequency divisions by use of the plurality of local oscillators. In the first media integrated receiving system of the present invention, the signal selection/separation unit may include a plurality of local oscillators having the same oscillation frequencies as those of the plurality of local oscillators included in the multiplexing/transmission unit so that the multiplexed signals are converted by use of the plurality of local oscillators into the plurality of media signals, the signal selection/separation unit selecting media signals to be signal processed by the signal processing unit from among the plurality of converted media signals.

In a media integrated receiving system of the present invention configured such that both the multiplexing/transmission unit and the signal selection/separation unit are provided with local oscillators, the signal selection/separation unit may select media signals to be signal processed by the signal processing unit in a sequentially varying manner, at predetermined timings, from the plurality of converted media signals. This enables the signal processing unit itself to process the sequentially varied media signals in sequence.

In a media integrated receiving system of the present invention configured so that both the multiplexing/transmission unit and the signal selection/separation unit are provided with local oscillators, at least one of the plurality of media signals may be a multiplexed media signal obtained by multiplexing a plurality of signals. The multiplexing/transmission unit may include a variable local oscillator having a variable frequency and a signal separator for separating signals having a predetermined oscillation frequency band so that the multiplexed media signals are multiplexed by use of signals acquired from the variable local oscillator and the signal separator. The signal selection/separation unit may include a predetermined-frequency local oscillator for converting the multiplexed signals into media signals by use of the predetermined oscillation frequency. When selecting and separating any one of the multiplexed media signals obtained by multiplexing a plurality of signals, the frequency of the variable local oscillator is set so that the signals to be selected and separated lie within a predetermined frequency band, with selection of the converted media signal made by use of the predetermined-frequency local oscillator. This enables multiplexed media signals obtained by multiplexing a plurality of signals to be signal processed in the same manner.

In a media integrated receiving system of the present invention configured so that the multiplexing/transmission unit is provided with local oscillators, the signal selection/separation unit may include a plurality of local oscillators having the same frequencies as those of the plurality of local oscillators included in the multiplexing/transmission unit, along with an oscillator selection unit for selecting one of the plurality of local oscillators. The signal selection/separation unit separates media signals to be signal processed by the signal processing unit from the multiplexed signals by use of a local oscillator selected by the oscillator selection unit. It is then possible to separate the media signals to be signal processed by the signal processing unit from the multiplexed signal through the selection of the local oscillator. The oscillator selection unit may select one from the plurality of local oscillators in sequence at a predetermined timing.

In the present invention, the multiplexing/transmission unit may include a predetermined local oscillator having a predetermined oscillation frequency and another local oscillator having an oscillation frequency different from the predetermined frequency so that the plurality of media signals are multiplexed through frequency divisions by use of the predetermined local oscillator and the other local oscillator. The signal selection/separation unit may include a predetermined-frequency band signal separation unit for separating signals having the predetermined oscillation frequency band, whereby the multiplexing/transmission unit is changed over such that media signals to be signal processed by the signal processing unit are multiplexed by use of the predetermined local oscillator and such that other media signals are multiplexed by use of the other local oscillator. Thus, through selective use of the predetermined local oscillators for the media signals to be signal processed by the signal processing unit, the media signals to be signal processed can be separated from the multiplexed signals. In a media integrated receiving system of the present invention, the signal selection/separation unit may switch media signals handled by the predetermined local oscillator at a predetermined timing. This enables the media signals processed by the signal processing unit to be changed over in sequence.

Furthermore, in the present invention, the signal selection/separation unit may convert the multiplexed signals into the plurality of media signals and select media signals to be signal processed by the signal processing unit from the plurality of converted media signals. In a media integrated receiving system of the present invention as described above, the signal selection/separation unit may select media signals to be signal processed by the signal processing unit, in sequence, from the plurality of converted media signals at a predetermined timing.

According to another aspect of the present invention there is provided a media integrated receiving system which receives a plurality of media signals by use of a plurality of antennas, the system comprising a signal processing unit capable of processing the plurality of media signals; a signal selection unit for selecting one of a plurality of media signals received by use of the plurality of antennas; and a transmission unit for transmitting the selected media signal to the signal processing unit.

In such a media integrated receiving system of the present invention, the signal selection unit selects one of a plurality of media signals received by use of the plurality of antennas, and the transmission unit transmits the selected media signal to the signal processing unit. According to this aspect of the present invention, the transmission unit need transmit only the media signal selected by the signal selection unit, with the result that a single transmission cable is sufficient even when a plurality of antennas are provided.

In this aspect of the present invention, the signal selection unit may select one of said plurality of media signals at a predetermined timing. This enables the media signals selected in sequence at a predetermined timing to be sequentially-processed by the signal processing unit.

According to yet another aspect of the present invention there is provided a media signal reception processing method comprising the steps of (a) multiplexing a plurality of media signals received through a plurality of antennas for transmission through a single transmission cable; (b) converting the multiplexed and transmitted signal into the plurality of media signals; and (c) selecting and processing at least one of the plurality of converted media signals.

In the above media signal reception processing method, it is possible to transmit a plurality of media signals received by a plurality of antennas through a single transmission cable and to process the plurality of transmitted media signals by separation and selection.

In the media signal reception processing method of the present invention, step (a) may include multiplexing the plurality of media signals by frequency divisions, and step (c) may include selecting the plurality of converted media signals in sequence at a predetermined timing. This enables the media signals to be processed in sequence.

According to still another aspect of the present invention there is provided a media signal reception processing method comprising the steps of (a) selecting one media signal from among a plurality of media signals received through a plurality of antennas; (b) transmitting the selected media signal; and (c) processing the transmitted signal. According to this media signal reception processing method of the present invention, only the selected media signal need be transmitted. This allows transmission through a single transmission cable, resulting in a simple configuration.

In the above media signal reception processing method of the present invention, the step (a) may include selecting the plurality of media signals in sequence at a predetermined timing. This enables the media signals selected at a predetermined timing to be sequentially processed.

### BRIEF DESCRIPTION OF THE DRAWINGS

FIG. 1 is a diagram showing a receiving system of a first embodiment of the present invention;
FIG. 2 illustrates a frequency division of a signal traveling over a common coaxial cable of the system of FIG. 1;
FIG. 3 is a diagram showing a receiving system of a second embodiment of the present invention;
FIG. 4 is a diagram showing a receiving system of a third embodiment of the present invention;
FIG. 5 is a diagram showing a receiving system of a fourth embodiment of the present invention;
FIG. 6 is a diagram showing a receiving system of a fifth embodiment of the present invention; and
FIGs. 7A to 7D illustrate media signal selection processing effected by the system of FIG. 6.

### DESCRIPTION OF THE PREFERRED EMBODIMENTS

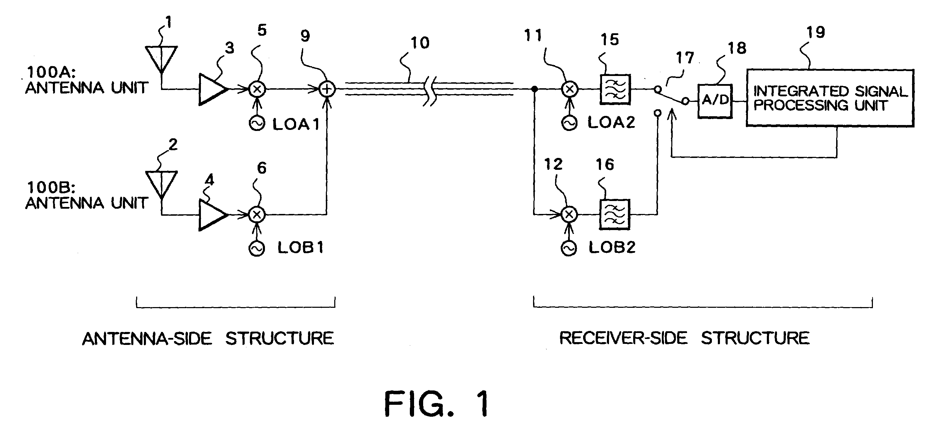

The present invention will now be described with reference to the accompanying drawings which illustrate preferred embodiments thereof in a non-limitative manner. FIG. 1 illustrates a media integrated receiving system of a first embodiment mounted on a vehicle. The receiving system consists of an antenna-side structure and a receiver-side structure which are connected via a single common coaxial cable. The antenna-side structure is placed at a location which facilitates receipt of electromagnetic signals, such as on a vehicle roof or an instrument panel. The receiver-side structure is placed in an appropriate space, such as within the body or trunk.

The antenna-side structure includes antenna units 100A and 100B which receive media signals A and B. For example, the antenna unit 100A may receive a VICS signal while the antenna unit 100B receives a digital television broadcast.

In the antenna unit 100A, an antenna 1 is connected via a low-noise amplifier 3 to a mixer 5, with the mixer 5 also being connected to a local oscillator LOA1. Similarly, in the antenna unit 100B, an antenna 2 is connected via a low-noise amplifier 4 to a mixer 6. The mixer 6 is connected to a local oscillator LOB1 as well. The outputs of the mixers 5 and 6 are connected to a synthesizer 9 which is connected to a common coaxial cable 10. Signals received by the antennas 1 and 2 are fed via the low-noise amplifiers 3 and 4, respectively, to the mixers 5 and 6, respectively. Using a signal input from the local oscillator LOA1, the mixer 5 converts a media A high-frequency signal into an intermediate-frequency signal to be fed through the common coaxial cable 10. In the same manner, using a signal input from the local oscillator LOB1, the mixer 6 converts a media B high-frequency signal into an intermediate-frequency signal also sent through the common coaxial cable 10. The synthesizer 9 synthesizes signals output from the mixers 5 and 6. The thus synthesized signals are fed through the common coaxial cable 10 to the receiver side.

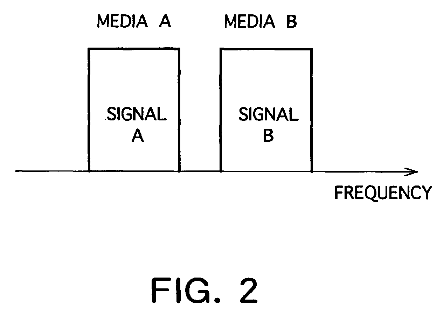

Herein, the media A and B signals are subjected to frequency divisions by use of the local oscillators LOA1 and LOB2. That is, oscillation frequencies of the local oscillators LOA1 and LOB2 are set so as to allow the frequencies of the output signals from the mixers 5 and 6 to differ as illustrated in FIG. 2.

The receiver-side structure will next be described. The receiver side includes mixers 11 and 12 arranged in parallel. The mixers 11 and 12 lead to respective local oscillators LOA2 and LOB2, and the outputs of the mixers 11 and 12 are coupled via filters 15 and 16 to an input changeover switch 17. The input changeover switch 17 is in turn coupled via an A/D converter 18 to an integrated signal processing unit 19.

When frequency divided media signals are received through the common coaxial cable 10, the media signals are distributed and fed into the mixers 11 and 12. The mixer 11 performs frequency conversion processing by use of a signal input from the receiver-side local oscillator LOA2. This conversion processing is made such that only the media A signal is converted into a baseband signal. That is, the frequency of the local oscillator LOA2 is set so as to allow only the signal A of FIG. 2 to be converted into a baseband level that an A/D converter 18 which follows can handle for the output processing. The resultant baseband signal is fed through the filter 15 to the input changeover switch 17.

In the same manner, the mixer 12 performs frequency conversion processing by use of a signal input from the receiver-side local oscillator LOB2. This processing is made such that only the media B signal is converted into a baseband signal. That is, the frequency of the local oscillator LOB2 is set so as to allow only the signal B of FIG. 2 to be converted into a baseband level processable by the next A/D converter 18. The resultant baseband signal is fed through the filter 16 to the input changeover switch 17.

The input changeover switch 17 is controlled by the integrated signal processing unit 19. The integrated signal processing unit 19 subjects received signals to digital processing such as demodulation and is able to process signals of either media solely. The integrated signal processing unit 19 causes the input changeover switch 17 to effect high-speed changeover actions at a predetermined timing. As a result, the media A and B baseband signals are alternately fed to the A/D converter 18. The integrated signal processing unit 19 receives digital signals from the A/D converter 18 and sorts the signals according to media to perform digital processing on each signal.

In this embodiment, as set forth hereinabove, signals of plural media are multiplexed by the frequency divisions and the multiplexed signals are fed to the integrated receiver through the single common coaxial cable. This simplified configuration using a single coaxial cable contributes to both an improvement in vehicle mounting properties and to a reduction in cost.

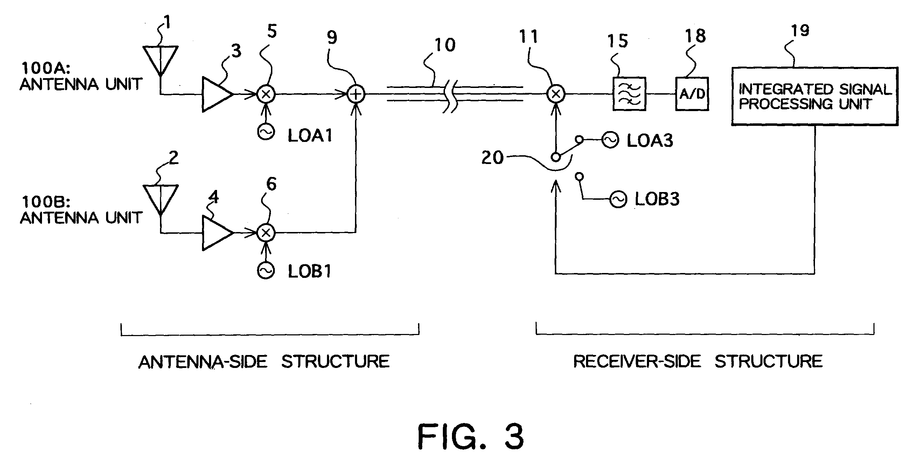

FIG. 3 illustrates a second embodiment which is a variant of the system of FIG. 1. A system of FIG. 3 has the same antenna-side structure as that of the FIG. 1 system. The receiver side includes a mixer 11, a filter 15, an A/D converter 18 and an integrated signal processing unit 19 which are connected in sequence. The number of the mixer and the A/D converter is one, with the exclusion of the input changeover switch 17.

The system shown in Fig. 3 also comprises two receiver-side local oscillators LOA3 and LOB3. The frequency of the oscillator LOA3 is set so as to allow conversion of just a media A signal into a baseband signal, while the frequency of the oscillator LOB3 is set so as to allow conversion of only a media B signal into a baseband signal.

The oscillators LOA3 and LOB3 are connected via an oscillator changeover switch 20 to the mixer 11. The oscillator changeover switch 20 is under control of the integrated signal processing unit 19, for high-speed changeover actions at predetermined timings.

When the oscillator changeover switch 20 is connected to the local oscillator LOA3, the mixer 11 converts the media A signal into a baseband level. When the oscillator changeover switch 20 is connected to the local oscillator LOB3, the mixer 11 converts the media B signal into a baseband level. The signals of the two media thus pass through the filter 15 in an alternate manner and are converted by the A/D converter 18 into digital signals, which in turn are fed to the integrated signal processing unit 19. The integrated signal processing unit 19 identifies the two media signals and subjects each signal to digital processing such as demodulation.

As set forth hereinabove, the system of FIG. 3 can also provide the same advantage of the present invention as acquired by the system shown in FIG. 1. Furthermore, in the system shown in FIG. 3, the receiver-side oscillators are changed over for use. The other circuit elements, i.e., the mixer and the filter are shared by the two media. The resulting a reduction in the number of mixers and filters enables further reduction of system size and cost.

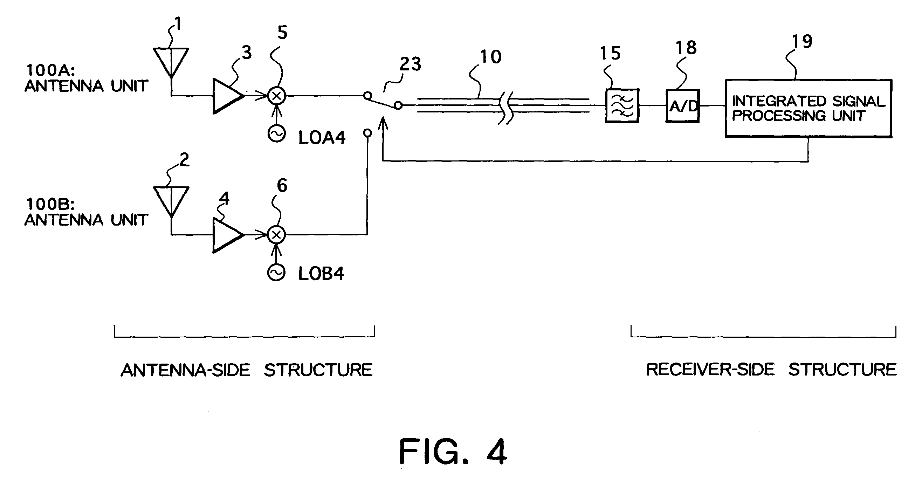

Referring to FIG. 4, a media integrated receiving system of a third embodiment will next be described. This system also comprises antenna units 100A and 100B corresponding to media A and B, respectively. The antenna units 100A and 100B include antennas 1 and 2, low-noise amplifiers 3 and 4, mixers 5 and 6, and local oscillators LOA4 and LOB4, respectively. The mixers 5 and 6 lead to an antenna changeover switch 23, which in turn is coupled to the common coaxial cable 10. In this respect, the system of FIG. 4 differs from the system shown in FIG. 1 in which a synthesizer 9 is disposed at the input end of the cable.

Signals received by the antennas 1 and 2 are fed via respective low-noise amplifiers 3 and 4 to the mixers 5 and 6, respectively. Using a signal input from the local oscillator LOA4, the mixer 5 performs a frequency conversion of a media A high-frequency signal to generate a baseband signal. That is, the frequency of the local oscillator LOA4 is set so as to allow the media A signal to be converted into a baseband level through mixing processing.

Similarly, using a signal input from the local oscillator LOB4, the mixer 6 performs a frequency conversion of a media B high-frequency signal to generate a baseband signal. The frequency of the local oscillator LOB4 is set so as to allow the media B signal to be converted into a baseband level through mixing processing.

The resultant baseband signals of the media A and B are fed to the antenna changeover switch 23. The changeover switch 23 is under control of the integrated signal processing unit 19, for high-speed switching at predetermined timings. The integrated signal processing unit 19 changes over the switch 23 to the side of the media desired to be received at their respective timings. This allows the signals of both two media to be alternately fed to the common coaxial cable 10 for transmission to the receiver side.

The receiver side includes a filter 15 allowing passage of the baseband signals therethrough, an A/D converter 18, and an integrated signal processing unit 19. The baseband signals delivered through the common coaxial cable 10 pass through the filter 15 and are converted by the A/D converter into digital signals, which in turn are fed to the integrated signal processing unit 19. The integrated signal processing unit 19 alternately receives the signals of one of the two media in response to the switching actions of the antenna switch 23. The integrated signal processing unit 19 identifies the two media signals for individual processings.

According to this embodiment, as set forth hereinabove, the baseband signal frequency conversion unit is transferred to the antenna side so that conversion into the baseband signals is completed on the antenna side. In addition, the media changeover switch is provided on the antenna side. Elimination of the mixers and local oscillators from the receiver side contributes to further simplifying the configuration. It is to be noted, however, that because the control signal line for the media changeover switch is extended as a result of a greater distance between the switch 23 and the integrated signal processing unit 19, the media changeover speed is restricted to a certain extent.

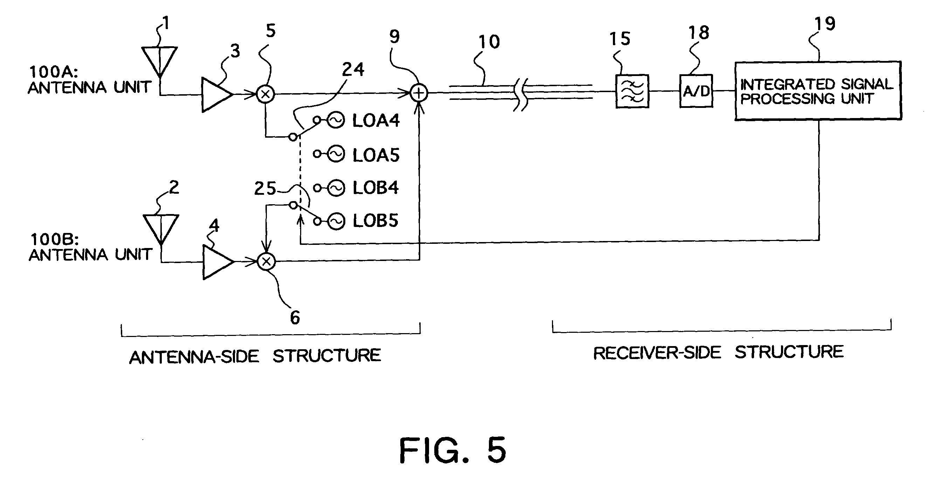

Referring now to FIG. 5, a media integrated receiving system of a fourth embodiment will be described. This system has also the antenna units 100A and 100B corresponding to two media A and B, respectively. The antenna units 100A and 100B include respective antennas 1 and 2, low-noise amplifiers 3 and 4, and mixers 5 and 6. The mixer 5 is connected to two local oscillators LOA4 and LOA5 by an oscillator changeover switch 24. Similarly, the mixer 6 is connected to two local oscillators LOB4 and LOB5 by an oscillator changeover switch 25. The outputs of the mixers 5 and 6 lead to a synthesizer 9 which is coupled to a common coaxial cable 10.

On the receiver side, the common coaxial cable 10 leads to a filter 15 allowing passage of baseband signals therethrough. The filter 15 is connected via an A/D converter 18 to an integrated signal processing unit 19.

The frequencies of the antenna-side local oscillators LOA4 and LOA5 are set as follows. The frequency of the oscillator LOA4 is set so as to allow the media A signal to be converted into a baseband level through mixing processing, i.e., into a signal passing through the filter 15. The frequency of the oscillator LOA5 is, on the other hand, set so as to allow the media A signal to be converted into a signal having a frequency other than the baseband, i.e., into a signal incapable of passing through the filter 15.

This also applies to the frequency setting of the local oscillators LOB4 and LOB5. The frequency of the oscillator LOB4 is set so as to allow conversion of the media B signal into a baseband level, and the frequency of the oscillators LOB5 is set so as to allow a conversion of the media B signal into a signal having a frequency other than the baseband.

The high-speed changeover actions of the oscillator changeover switches 24 and 25 are controlled by the integrated signal processing unit 19. When the mixer 5 is connected to the oscillator LOA4, the mixer 6 leads to the oscillator LOB5. Conversely, when the mixer 5 is connected to the oscillator LOA5, the mixer 6 leads to the oscillator LOB4. The integrated signal processing unit 19 provides a control of the changeover switches 24 and 25 such that the former switching state is presented for fetching the media A signal and such that the latter switching state is presented when fetching the media B signal.

Thus, when the media A signal is converted into a baseband signal through the mixing processing effected by the mixers 5 and 6, the media B signals is converted into a signal having a frequency other than the baseband and when the media B signal is converted into a baseband signal, the media A signal is converted into a signal having a frequency other than the baseband.

This pattern allows the signals of the media A and B to alternately pass through the receiver-side filter 15 to reach the A/D converter 18, and ensures that there will be no simultaneous passage through the receiver-side filter 15. Digital signals generated by the A/D converter 18 are then fed to the integrated signal processing unit 19. Because the integrated signal processing unit 19 receives the signals of the two media alternately in response to the changeover actions of the switches 24 and 25, the integrated signal processing unit 19 identifies the two media signals for individual processings.

In this embodiment, as set forth hereinabove, signals of the two media are subjected to frequency conversions on the antenna side such that at any one time only one media signal is converted into a signal having a specific frequency (a signal passing through the filter 15) processed on the receiver side beyond the cable. This configuration, in which the single common coaxial cable 10 connects the antenna side and the receiver side, achieves the effect of the present invention.

In this embodiment in particular, the frequency conversions of both media signals are performed on the antenna side upstream of the common cable taking the receiver-side filter characteristics into consideration, with the result that the changeover of the media signals to be processed on the receiver side is indirectly and substantially effected. Unlike the system shown in FIG. 4, the reception signal path is not provided with any switches, resulting in an advantage that the signal losses may be reduced.

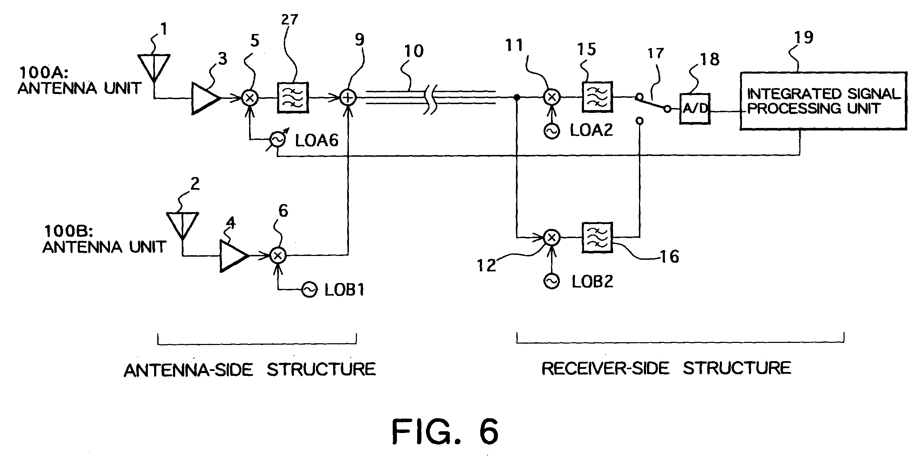

Referring next to FIG. 6, a fifth embodiment of the present invention will be described. A system of FIG. 6 is a variant of the system shown in FIG. 1. In this embodiment, media A employs a frequency division method so that a plurality of channels are set for the media A.

The system shown in FIG. 6 differs from that of FIG. 1 in the configuration of the antenna unit 100A on the antenna side. In this embodiment, a local oscillator LOA6 of the antenna unit 100A is configured to be frequency variable. This frequency variable local oscillator LOA6 is under control of an integrated signal processing unit 19.

This embodiment further includes a filter 27 interposed between a mixer 5 and a synthesizer 9. The filter 27 has a characteristic allowing a passage therethrough of a signal with the frequency indicated by the signal A of FIG. 2.

In this embodiment, the integrated signal processing unit 19 varies the frequency of the local oscillator LOA6 in response to the channel to be received, whereby only the signal of the channel to be received can pass through the filter 27.

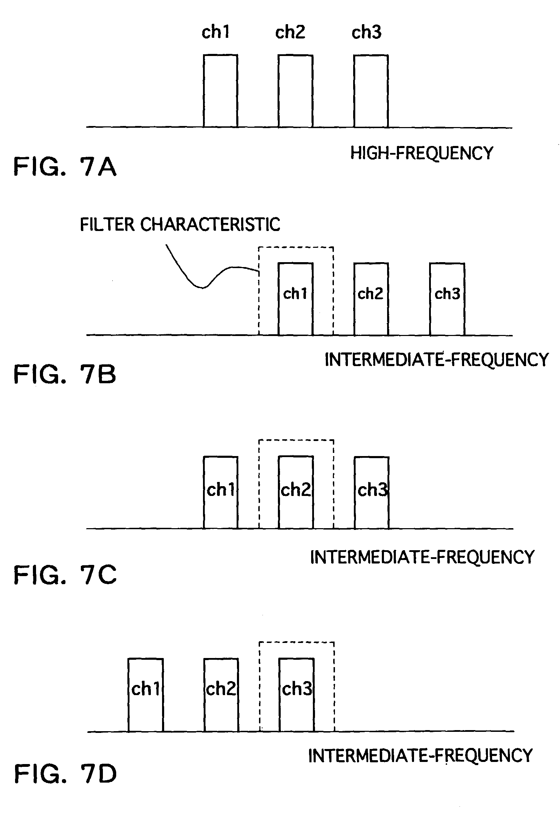

FIGs. 7A to 7D illustrate an example of the frequency control. As shown in FIG. 7A, a media A high-frequency signal received by the antenna 1 includes three frequency-divided channel signals ch1 to ch3. This high-frequency signal is converted through the frequency conversion effected by the mixer 5 into an intermediate-frequency signal passing through the common coaxial cable 10.

As illustrated in FIGs. 7B to 7D, the frequency conversion is made such that only the signal of the channel desired to be received can pass through the filter 27. The broken lines of FIG. 7B to 7D indicate the frequency capable of passing through the filter 27, with the setting of this frequency corresponding to the signal A of FIG. 2.

If receipt of the first channel ch1 is desired, then the frequency of the local oscillator LOA6 is controlled by the integrated signal processing unit 19 such that the frequency conversion indicated in FIG. 7B is made. As a result, only the first channel ch1 signal can pass through the filter 27 to reach the synthesizer 9, in which it is combined with the media B signal for frequency division multiplexing. The thus multiplexed signals are fed to the common coaxial cable 10. The same applies to the other channels.

According to this embodiment, as set forth hereinabove, the bandwidth of the signal traveling over the common coaxial cable 10 will be remarkably narrowed compared with a case where all the channel signals of the media A are passed through the common coaxial cable 10. It is thus possible to obtain an advantage that the frequency distribution design for frequency division as illustrated in FIG. 2 is easy to perform. Furthermore, as no unnecessary signals travel over the common coaxial cable 10 to the receiver, interference or other similar problems almost dissappear.

Although various embodiments of the present invention have been described hereinabove, it is natural that the above embodiments can variously be modified without departing from the spirit and the scope of the present invention. It is to be appreciated, for example, that while throughout the description of the above embodiments the number of the object media was given as two, the present invention is applicable similarly to the use of three or more different kinds of media. That is, a corresponding number of antenna units to the number of media are provided and are each subjected to frequency divisions or changeover actions. The receiving system of the present invention could also be used in configurations other than those mounted on a vehicle.

Antenna units 100A and 100B receive signals of two different media. The antenna units 100A and 100B are connected to an integrated receiver through a common coaxial cable 10. The two media signals are frequency divided through frequency conversion by use of local oscillators LOA1 and LOB1 and travel over the common coaxial cable 10. Configuration is simplified because only a single cable provided for a plurality of antennas. In another aspect, the antenna side is provided with a changeover switch for allowing the two media signals to alternately travel over the common coaxial cable. In a further aspect, frequency conversion processing is effected on the antenna side such that one media signal at a time is converted into a signal having a specific frequency capable of being processed by the receiver side.

## Claims

1. A media integrated receiving system which receives a plurality of media signals by use of a plurality of antennas, said system comprising:
a signal processing unit capable of processing said plurality of media signals;
a multiplexing/transmission unit for multiplexing and transmitting said plurality of media signals received by use of said plurality of antennas; and
a signal selection/separation unit for selecting and separating media signals to be signal processed by said signal processing unit, from said multiplexed and transmitted signals.

2. A media integrated receiving system according to claim 1, wherein
said multiplexing/transmission unit transmits the multiplexed signals through a single transmission cable.

3. A media integrated receiving system according to claim 1, wherein
said signal selection/separation unit selects and separates said plurality of media signals in a sequential manner.

4. A media integrated receiving system according to claim 1, wherein
said multiplexing/transmission unit includes a plurality of local oscillators having different oscillation frequencies so that said plurality of media signals are multiplexed through frequency divisions by use of said plurality of local oscillators.

5. A media integrated receiving system according to claim 4, wherein
said signal selection/separation unit includes a plurality of local oscillators so that said multiplexed signals are converted by use of said plurality of local oscillators into intermediate frequency signals, said signal selection/separation unit selecting media signals to be signal processed by said signal processing unit, from said converted intermediate frequency signals.

6. A media integrated receiving system according to claim 5, wherein
said signal selection/separation unit selects media signals to be signal processed by said signal processing unit in a sequentially varying manner, at predetermined timings, from said plurality of converted media signals.

7. A media integrated receiving system according to claim 5, wherein
at least one of said plurality of media signals is a multiplexed media signal obtained by multiplexing a plurality of signals,
said multiplexing/transmission unit includes a variable local oscillator having a variable frequency, and a signal separator for separating signals having a predetermined oscillation frequency band, said multiplexed media signals being multiplexed by use of signals acquired from said variable local oscillator and said signal separator,
said signal selection/separation unit includes a predetermined-frequency local oscillator for converting said multiplexed signals into media signals by use of said predetermined oscillation frequency, and
when selecting and separating any one of said multiplexed media signals each obtained by multiplexing a plurality of signals, the frequency of said variable local oscillator is changed over so that the signals to be selected and separated lie within a predetermined frequency band, with selection of a converted media signal made by use of said predetermined-frequency local oscillator.

8. A media integrated receiving system according to claim 4, wherein
said signal selection/separation unit includes a plurality of local oscillators, and an oscillator selection unit for selecting one of said plurality of local oscillators, said signal selection/separation unit separating signals to be signal processed by said signal processing unit from said multiplexed signals by use of a local oscillator selected by said oscillator selection unit.

9. A media integrated receiving system according to claim 8, wherein
said oscillator selection unit selects one of said plurality of local oscillators in sequence at a predetermined timing.

10. A media integrated receiving system according to claim 1, wherein
said multiplexing/transmission unit includes a predetermined local oscillator having a predetermined oscillation frequency, and another local oscillator having another oscillation frequency different from said predetermined frequency, said multiplexing/transmission unit multiplexing said plurality of media signals through frequency divisions by use of said predetermined local oscillator and said another local, oscillator, and wherein
said signal selection/separation unit includes a predetermined-frequency band signal separation unit for separating signals having said predetermined oscillation frequency band, whereby said multiplexing/transmission unit is changed over such that media signals to be signal processed by said signal processing unit are multiplexed by use of said predetermined local oscillator and such that other media signals are multiplexed by use of said another local oscillator.

11. A media integrated receiving system according to claim 10, wherein
said signal selection/separation unit changes over media signals handled by said predetermined local oscillator, at a predetermined timing.

12. A media integrated receiving system according to claim 1, wherein
said signal selection/separation unit converts said multiplexed signals into said plurality of media signals and selects media signals to be signal processed by said signal processing unit from said plurality of converted media signals.

13. A media integrated receiving system according to claim 12, wherein
said signal selection/separation unit selects media signals to be signal processed by said signal processing unit, in sequence, from said plurality of converted media signals at a predetermined timing.

14. A media integrated receiving system which receives a plurality of media signals by use of a plurality of antennas, said system comprising:
a signal processing unit capable of processing said plurality of media signals;
a signal selection unit for selecting one of a plurality of media signals received by use of said plurality of antennas; and
a transmission unit for transmitting said selected media signal to said signal processing unit.

15. A media integrated receiving system according to claim 9, wherein
said signal selection unit selects one of said plurality of media signals in sequence at a predetermined timing.

16. A media signal reception processing method for receiving and processing a plurality of media signals by use of a plurality of antennas, said method comprising the steps of:
(a) multiplexing a plurality of media signals received by use of said plurality of antennas, for transmission through a single transmission cable;
(b) converting a multiplexed and transmitted signal into said plurality of media signals; and
(c) selecting and processing at least one of said plurality of converted media signals.

17. A media signal reception processing method according to claim 16, wherein
said step (a) includes multiplexing said plurality of media signals by frequency divisions.

18. A media signal reception processing method according to claim 16, wherein
said step (c) includes selecting said plurality of converted media signals in sequence at a predetermined timing.

19. A media signal reception processing method for receiving and processing a plurality of media signals by use of a plurality of antennas, said method comprising the steps of:
(a) selecting one media signal from a plurality of media signals received by use of said plurality of antennas;
(b) transmitting said selected media signal; and
(c) processing said transmitted signal.

20. A media signal reception processing method according to claim 19, wherein
said step (a) includes selecting said plurality of media signals in sequence at a predetermined timing.
